(19) Europäisches Patentamt
European Patent Office
Office européen des brevets

(11) **EP 1 130 355 A2**

(12) **EUROPEAN PATENT APPLICATION**

(43) Date of publication:
**05.09.2001 Bulletin 2001/36**

(51) Int Cl.[7]: **G01C 15/00**

(21) Application number: **01301863.5**

(22) Date of filing: **01.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.03.2000 JP 2000057198**

(71) Applicant: **KABUSHIKI KAISHA TOPCON
Tokyo-to (JP)**

(72) Inventors:
• **Ohtomo, Fumio, c/o Kabushiki Kaisha Topcon
  Tokyo-to (JP)**
• **Kimura, Akio
  Tokyo-to (JP)**

(74) Representative: **Maggs, Michael Norman et al
Kilburn & Strode
20 Red Lion Street
London WC1R 4PJ (GB)**

(54) **Target, surveying system and surveying method**

(57) A target, comprising a pole for indicating a measuring point, an object to be measured as provided on said pole with a predetermined distance from said measuring point, a tilting sensor for detecting tilting of said pole, and transmitting means for transmitting detection data of said tilting sensor to a survey instrument.

## FIG.1

EP 1 130 355 A2

Printed by Jouve, 75001 PARIS (FR)

## Description

BACKGROUND OF THE INVENTION

The present invention relates to a target to be set at a measuring point, and a surveying system and a surveying method for measuring a distance to the target.

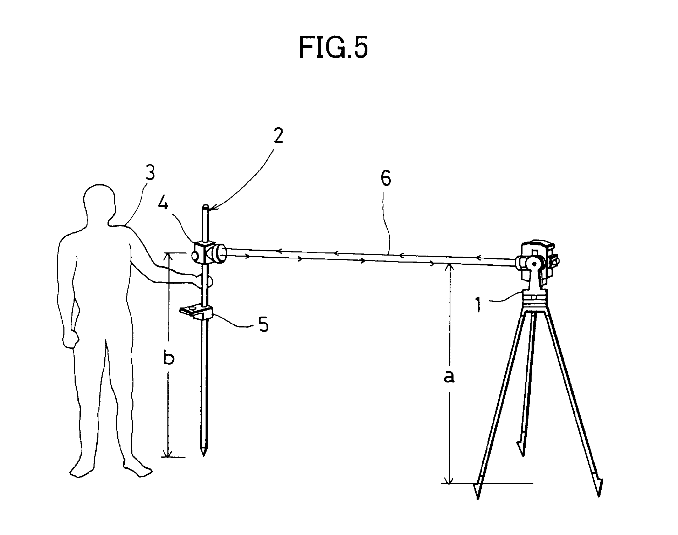

A surveying system comprises a survey instrument 1 and a target. Description will be given now on a target, a surveying system, and a surveying method of conventional type referring to Fig. 5.

The survey instrument 1 is positioned at a height "a" at a known point. A prism pole 2 is erected as a target at a measuring point. An operator 3 holds the prism pole 2 in a vertical direction.

The prism pole 2 is provided with a reflective prism (corner cube) 4 having retroreflectivity, which is attached at a predetermined height from a lower end of the pole (a known height "b") and used as an object to be measured, and it has a circular bubble tube 5 at a position as required. The reflective prism 4 reflects a distance measuring light 6 emitted from the survey instrument 1 and sends it back to the survey instrument 1. The circular bubble tube 5 is used to observe tilting of the prism pole 2, and it is provided at a position easily watched by the operator 3.

To perform surveying operation of the measuring point, the operator 3 erects the prism pole 2 at the measuring point, and the reflective prism 4 is accurately faced toward the survey instrument 1. The distance measuring light 6 from the survey instrument 1 is reflected by the reflective prism 4 so that the light enters the survey instrument 1. The vertical position of the prism pole 2 is kept by watching the circular bubble tube 5. The distance measuring light 6 from the prism pole 2 enters the survey instrument 1, and the position of the prism pole 2 is surveyed.

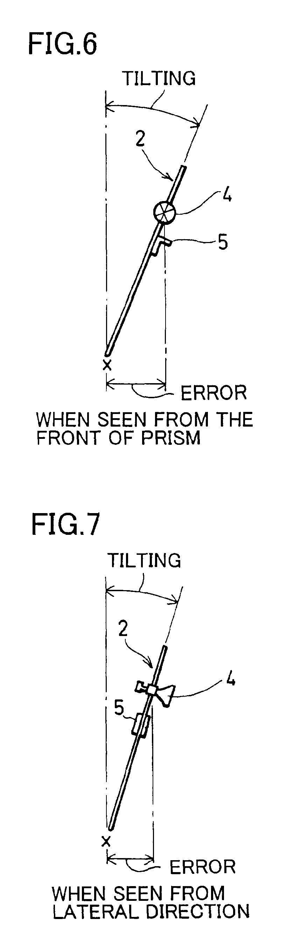

In the surveying operation as described above, when the prism pole 2 is tilted, the position of the reflective prism 4 is displaced in a horizontal direction with respect to the lower end of the prism pole 2 as shown in Fig. 6 and Fig. 7. This displacement in the horizontal direction is turned to an error in the survey. The prism pole 2 is provided with the circular bubble tube 5, and the operator 3 holds the prism pole 2 in the vertical position while watching the circular bubble tube 5. However, it is very difficult for the operator 3 to continuously and elaborately adjust the tilting of the prism pole 2 so that an air bubble 7 in the circular bubble tube 5 remains always within an index circle 8. It is unavoidable that there is slight tilting due to detection accuracy of the circular bubble tube 5. For instance, it is supposed that the circular bubble tube 5 has sensitivity of about 30 minutes/2 mm (i.e. tilting angle is 30 minutes when the displacement of the air bubble is 2 mm). Even when the air bubble 7 is retained within the index circle 8, if the height of the reflective prism 4 is set to 1.3 m, the following error occurs:

$$1300 \times \sin 0.5 = 11.3 \text{ mm}$$

Even when a bubble tube with higher sensitivity is used, it is practically very difficult for the operator 3 to hold the prism pole 2 in a vertical position in response to the sensitivity of the circular bubble tube, and it is almost meaningless to use the circular bubble tube 5 with high sensitivity.

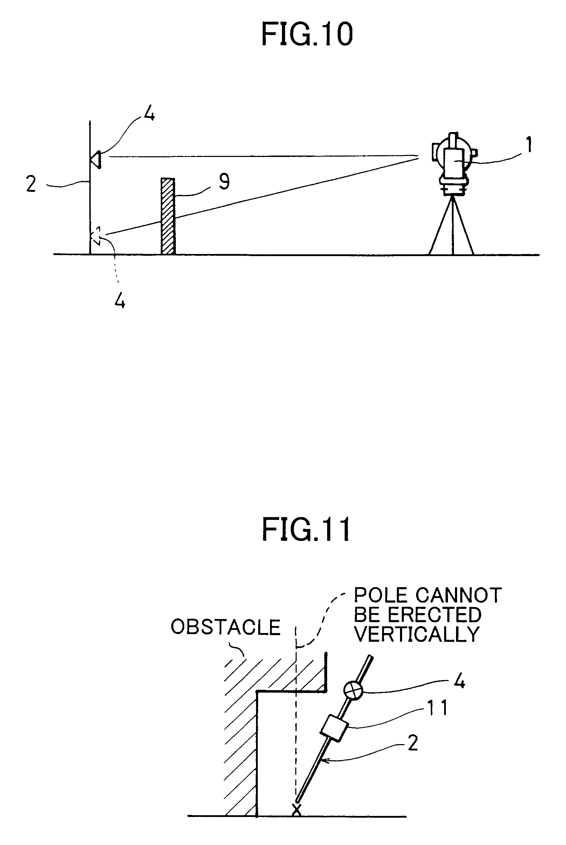

The error is proportional to the height of the reflective prism 4. For the purpose of minimizing the error caused by the tilting of the prism pole 2, it is very effective to set the reflective prism 4 at a position as low as possible. However, as shown in Fig. 10, when there is an obstacle, i.e. a natural object such as grass, rocks, etc., or other artificial object, between the survey instrument 1 and the prism pole 2, the reflective prism 4 must be provided at a higher position to avoid the obstacle. If not, it is unavoidable that the error occurs.

Also, depending on each location, there may be an obstacle above the measuring point as shown in Fig. 11. In such case, the prism pole 2 cannot be erected in a vertical direction, and it is unavoidable that a measurement error occurs.

SUMMARY OF THE INVENTION

To overcome the above problems, it is an object of the present invention to provide a target, a surveying system and a surveying method, by which it is possible to perform accurate surveying operation at all times regardless of the erecting condition of the prism pole.

To attain the above object, the target according to the present invention comprises a pole for indicating a measuring point, an object to be measured as provided on the pole with a predetermined distance from the measuring point, a tilting sensor for detecting tilting of the pole, and transmitting means for transmitting detection data of the tilting sensor to a survey instrument. Also, the present invention provides the target as described above, wherein a reflector having retroreflectivity is provided as the object to be measured. Further, the present invention provides the target as described above, wherein the tilting sensor detects tilting in a linear direction of a line passing through the survey instrument and the measuring point, and tilting in an orthogonal direction perpendicularly crossing the linear direction. Also, the present invention provides a surveying system, which comprises a pole for indicting a measuring point, an object to be measured as provided on the pole at a predetermined distance from the measuring point, a tilting sensor for detecting tilting of the pole, receiving means for receiving measurement data with respect to the object to be measured from a survey instrument, and a display unit for displaying measured values, wherein the measurement data are compensated to the measured values based on detection data of the. tilting sensor and are displayed on the display unit. Further, the present invention provides a surveying system, which comprises a target for indicating a measuring point and a survey instrument for measuring a distance and an angle to the target at the measuring point, wherein the target comprises a pole for indicating the measuring point, an object to be measured as provided on a pole at a predetermined distance from the measuring point, a tilting sensor for detecting tilting of the pole, and transmitting means for transmitting detection data of the tilting sensor to the survey instrument, and the survey instrument comprises receiving means for receiving the detection data. Further, the present invention provides the surveying system as described above, wherein the object to be measured is a reflector having retroreflectivity. Also, the present invention provides the surveying system as described above, wherein the tilting sensor detects tilting in a linear direction of a line passing through the survey instrument and the measuring point, and tilting in an orthogonal direction perpendicularly crossing the direction of the line. Further, the present invention provides the surveying system as described above, a target provided with an object to be measured and for indicating a measuring point, and a survey instrument for measuring a distance to the object to be measured and an angle, wherein the survey instrument comprises transmitting means for transmitting measurement data with respect to the object to be measured, and the target comprises a pole for indicating the measuring point, an object to be measured provided on the pole at a predetermined distance from the measuring point, a tilting sensor for detecting tilting of the pole, receiving means for receiving measurement data from the survey instrument, an arithmetic unit for compensating the measurement data to measured values based on detection data of the tilting sensor, and a display unit for displaying the measured values. Also, the present invention provides a surveying method in a surveying system, which comprises a survey instrument having one of receiving means or transmitting means and function to measure a distance and an angle, and a target having the other of the receiving means or the transmitting means, a tilting sensor, and an object to be measured as disposed at a measuring point, wherein the surveying method comprises the steps of measuring the object to be measured as located at a known distance from the measuring point by the survey instrument, detecting tilting of the target by the tilting sensor, transmitting distance measurement data or detection data of the tilting sensor to the receiving means by the transmitting means, compensating the distance data and the angle data based on the detection data, and displaying the compensated distance and angle measurement data to a display unit provided on the receiving means.

BRIEF DESCRIPTION OF THE DRAWINGS

Fig. 1 is a drawing to show an embodiment of the present invention;
Fig. 2 is a schematical block diagram of the embodiment of the present invention;
Fig. 3 is a drawing to show an aspect of surveying in the embodiment of the present invention;
Fig. 4 is a schematical block diagram to show another embodiment of the present invention;
Fig. 5 is a drawing of a conventional example;
Fig. 6 is a drawing to explain tilting of a prism pole and how error occurs;
Fig. 7 is a drawing to explain tilting of a prism pole and how error occurs;

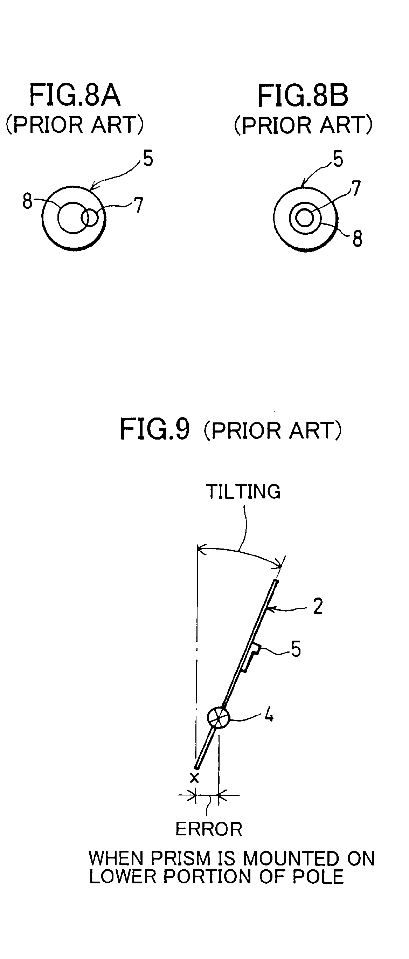

Fig. 8 shows drawings each representing a circular bubble tube;
Fig. 9 is a drawing to explain tilting of a prism pole and how error occurs;
Fig. 10 is a drawing to explain a surveying procedure in the conventional example; and
Fig. 11 is a drawing to explain another surveying procedure in the conventional example.

DETAILED DESCRIPTION OF THE PREFERRED EMBODIMENT

Detailed description will be given below on embodiments of the present invention referring to figures.

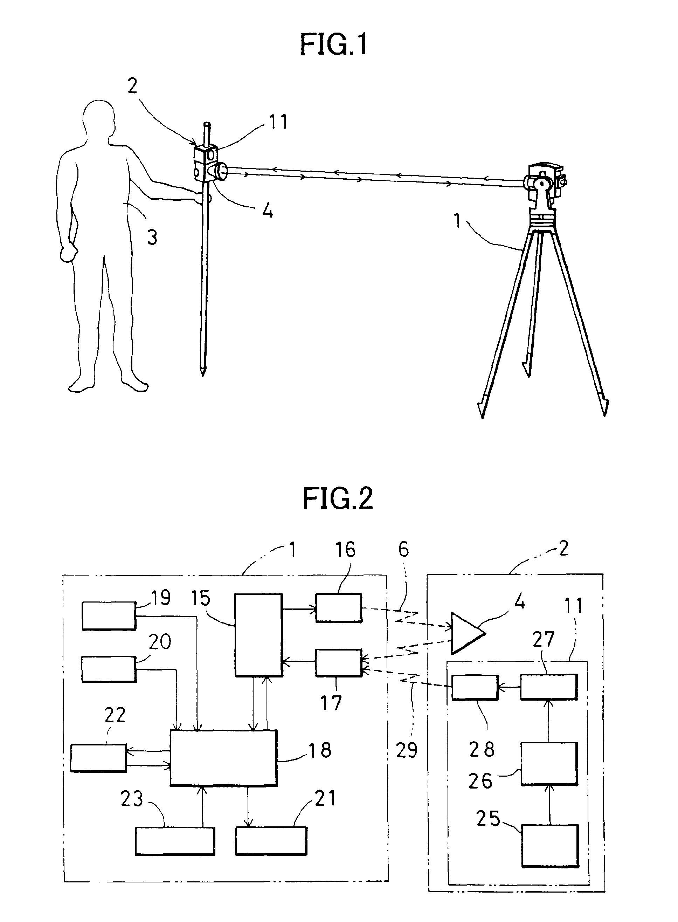

A first embodiment of the present invention will be described below referring to Fig. 1 and Fig. 2.

In Fig. 1, the same component as in Fig. 5 is referred by the same symbols, and detailed description is not given here.

A survey instrument 1 is set up at a known point. A prism pole 2 is erected as a target at the known point, and an operator 3 holds the prism pole 2 in an approximately vertical direction.

The prism pole 2 comprises a reflective prism (corner cube) 4 at a predetermined height (a known height) from a lower end of the pole, and an error compensator 11 is mounted at a position as required.

An outline of the structure will be described referring to Fig. 2.

First, the survey instrument 1 is described.

A distance measuring unit 15 drives a light emitting unit 16, and a distance measuring light 6 is projected toward the prism pole 2. After being reflected by the reflective prism 4, the distance measuring light 6 is received by a photodetection unit 17, and a photodetection signal is inputted to the distance measuring unit 15. As to be described later, the photodetection unit 17 receives a data communication light 29 emitted from the error compensator 11.

A result of distance measurement from the distance measuring unit 15 is inputted to a control arithmetic unit 18. To the control arithmetic unit 18, results of detection from a vertical angle measuring unit 19 and a horizontal angle measuring unit 20 are inputted. Based on the results from the vertical angle measuring unit 19, the horizontal angle measuring unit 20 and the distance measuring unit 15, a distance, a bearing and an elevation angle, etc. of the reflective prism 4 are measured. The results of the measurement or the operating condition of the survey instrument are displayed on a display unit 21. The survey instrument 1 is provided with a storage unit 22 for storing programs necessary for calculating at the control arithmetic unit 18 and for storing the results of the calculation, and with an operation input unit 23 for operating the survey instrument 1.

Next, description will be given below on the error compensator 11.

The error compensator 11 comprises a biaxial tilting sensor 25. The biaxial tilting sensor 25 detects tilting in a linear direction of a line, which passes through the survey instrument 1 and the measuring point, and also detects tilting in an orthogonal direction perpendicularly crossing the line. A signal from the biaxial tilting sensor 25 is inputted to a tilting detection circuit 26. At the tilting detection circuit 26, tilting information of the prism pole such as a tilting direction, a tilting angle, etc. of the prism pole is calculated, and the results of calculation are inputted to a transmission circuit 27. At the transmission circuit 27, the tilting information is turned to communication data, and it is inputted to a data communication light emitter 28 as tilting data. The data communication light emitter 28 emits the data communication light 29 and superimposes the tilting data on the data communication light 29 by means such as modulation.

Now, description will be given on operation.

The tilting of the prism pole 2 is detected by the biaxial tilting sensor 25, and the result of the detection is projected from the data communication light emitter 28 toward the photodetection unit 17 by the data communication light 29. The photodetection unit 17 inputs the photodetection signal to the distance measuring unit 15. The distance measuring unit 15 extracts the tilting data from the photodetection signal and inputs it to the control arithmetic unit 18. At the control arithmetic unit 18, an error of a position of the reflective prism 4 is calculated based on the tilting data, and the results of the distance measurement inputted from the distance measuring unit 15 is corrected or compensated.

Description will be given now on compensation of the position of the reflective prism 4 at the control arithmetic unit 18.

From tilting angles in X direction and Y direction of the prism pole 2 relative to a vertical direction as detected by the biaxial tilting sensor 25 and the height of the reflective prism 4, it is possible to calculate measurement errors $\Delta X$, $\Delta Y$ and $\Delta Z$ in X, Y and Z directions respectively of the prism position with respect to the coordinates of the measuring point using the equations given below. By these calculated values, the results measured by the distance measuring unit 15 is compensated as follows.

$$\Delta X = hp \times \sin \theta x$$

$$\Delta Y = hp \times \sin \theta y$$

$$\Delta Z = hp \times \{1 - \sqrt{[1-(\sin^2\theta x + \sin^2\theta y)]}\}$$

where

hp: Height of the prism
$\theta x$: Tilting in X direction
$\theta y$: Tilting in Y direction

At real time, the compensated accurate position of the reflective prism 4 is calculated, and the results are displayed on the display unit 21 as the results of the survey.

As described above, even when the prism pole 2 is tilted, the accurate position of the measuring point can be obtained. This makes it possible to perform surveying operation even at a place where the prism pole 2 cannot be erected in a vertical direction as shown in Fig. 11. It is also possible to perform surveying at any point, which is not easily accessible such as a ceiling of a building, a corner of a ceiling, etc.

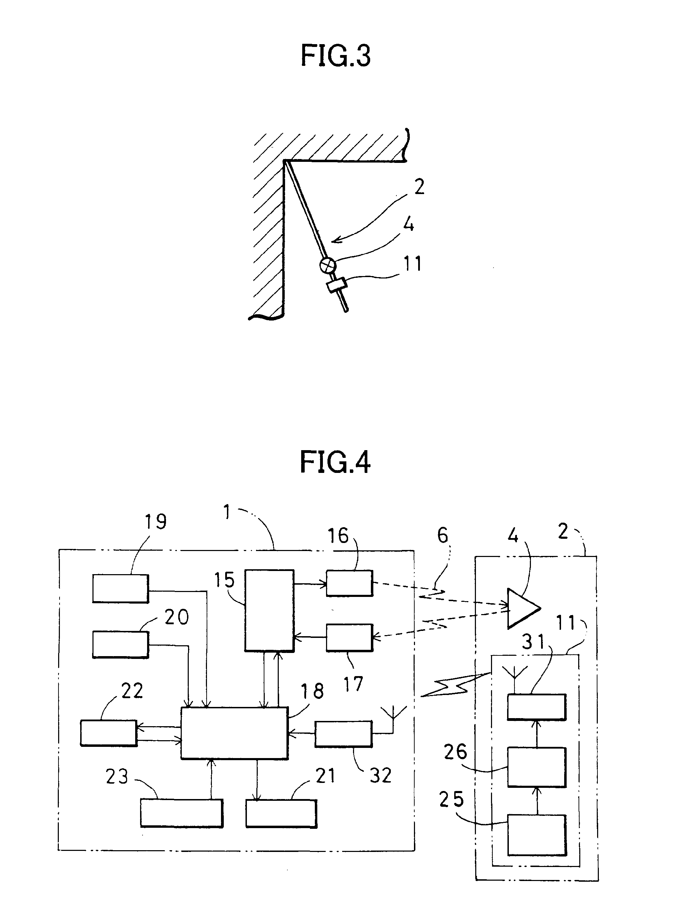

Fig. 4 shows another embodiment of the invention. In this embodiment, the tilting of the prism pole 2 is transmitted not by optical communication but by radio communication. Therefore, a radio transmission circuit 31 is provided on the error compensator 11, and a receiving circuit 32 is arranged at the survey instrument 1, and the tilting data is transmitted between the prism pole 2 and the survey instrument 1 via radio communication.

It is preferable that the tilting sensor 25 can perform biaxial detection, i.e. detection in X and Y directions. However, a monoaxial sensor may be used in case operation is performed as follows. At first, the position of the prism pole 2 in left-to-right direction is determined with respect to the surveying instrument 1 by layout, etc. And then, the position in front-to-rear direction is determined by monoaxial sensor while distance measurement is performed. Further, the tilting sensor 25 may be mounted alone on the prism pole 2, or it may be integrated with a holder (not shown) of the reflective prism 4 or with a data transceiver (not shown).

Also, the communication means such as optical communication or radio communication may be provided on the surveying instrument 1, while the receiving means corresponding to it may be provided on the prism pole 2 side. It may be possible to transmit a position information data of the reflective prism 4 measured at the distance measuring unit 15 toward the prism pole 2, and it may be designed that a display unit is provided on the error compensator 11 side so as to display compensated position information data of the reflective prism device 4. The compensation of the survey data may be performed on the survey instrument 1 side or on the error compensator 11 side by providing the arithmetic unit on the error compensator 11.

When the surveying data is displayed on the error compensator 11, the operator 3 holding the prism pole 2 can identify the accurate position of the measuring point, and surveying operation can be carried out even when the operator is not assigned on the side of the survey instrument 1. If the survey instrument 1 is designed as a total station with the reflective prism 4 provided with tracing function, it is possible to perform surveying operation at any point by simply holding the prism pole 2.

According to the present invention, it is possible to perform accurate surveying operation at all times regardless of the tilting condition of the pole. This reduces a burden on the operator. Also, it is possible to perform accurate surveying operation for a point where the pole cannot be erected in a vertical direction.

**Claims**

1. A target, comprising a pole for indicating a measuring point, an object to be measured as provided on said pole with a predetermined distance from said measuring point, a tilting sensor for detecting tilting of said pole, and transmitting means for transmitting detection data of said tilting sensor to a survey instrument.

2. A target according to claim 1, wherein a reflector having retroreflectivity is provided as the object to be measured.

3. A target according to claim 1, wherein said tilting sensor detects tilting in a linear direction of a line passing through the survey instrument and the measuring point, and tilting in an orthogonal direction perpendicularly crossing said linear direction.

4. A target, comprising a pole for indicting a measuring point, an object to be measured as provided on said pole at a predetermined distance from said measuring point, a tilting sensor for detecting tilting of said pole, receiving means for receiving measurement data with respect to said object to be measured from a survey instrument, and a display unit for displaying measured values, wherein said measurement data are compensated to said measured values based on detection data of said tilting sensor and are displayed on said display unit.

5. A surveying system, comprising a target for indicating a measuring point and a survey instrument for measuring a distance and an angle to said target at said measuring point, wherein said target comprises a pole for indicating said measuring point, an object to be measured as provided on said pole at a predetermined distance from said measuring point, a tilting sensor for detecting tilting of said pole, and transmitting means for transmitting detection data of said tilting sensor to said survey instrument, and said survey instrument comprises receiving means for receiving said detection data.

6. A surveying system according to claim 5, wherein said object to be measured is a reflector having retroreflectivity.

7. A surveying system according to claim 5, wherein said tilting sensor detects tilting in a linear direction of a line passing through the survey instrument and the measuring point, and tilting in an orthogonal direction perpendicularly crossing said direction of said line.

8. A surveying system comprising a target provided with an object to be measured and for indicating a measuring point, and a survey instrument for measuring a distance and an angle to said object to be measured, wherein said survey instrument comprises transmitting means for transmitting measurement data with respect to said object to be measured, and said target comprises a pole for indicating said measuring point, an object to be measured provided on said pole at a predetermined distance from said measuring point, a tilting sensor for detecting tilting of said pole, receiving means for receiving measurement data from said survey instrument, an arithmetic unit for compensating said measurement data to measured values based on detection data of said tilting sensor, and a display unit for displaying said measured values.

9. A surveying method in a surveying system, which comprises a survey instrument having one of receiving means or transmitting means and function to measure a distance and an angle, and a target having the other of said receiving means or said transmitting means, a tilting sensor, and an object to be measured as disposed at a measuring point, wherein said surveying method comprises the steps of measuring said object to be measured as located at a known distance from said measuring point by said survey instrument, detecting tilting of said target by said tilting sensor, transmitting distance measurement data or detection data of said tilting sensor to said receiving means by said transmitting means, compensating said distance data and said angle data based on said detection data, and displaying the compensated distance and angle measurement data to a display unit provided on said receiving means.

# FIG.1

# FIG.2

# FIG.3

# FIG.4

# FIG.5

## FIG.6

TILTING

2

4

5

×

ERROR

WHEN SEEN FROM THE
FRONT OF PRISM

## FIG.7

TILTING

2

4

5

×

ERROR

WHEN SEEN FROM
LATERAL DIRECTION

# FIG.8A
(PRIOR ART)

# FIG.8B
(PRIOR ART)

# FIG.9 (PRIOR ART)

TILTING

ERROR

WHEN PRISM IS MOUNTED ON
LOWER PORTION OF POLE

# FIG.10

# FIG.11